# EUROPÄISCHE PATENTSCHRIFT

(11) **EP 1 184 330 B1**
(45) Veröffentlichungstag und Bekanntmachung des Hinweises auf die Patenterteilung: **25.02.2004**
(21) Anmeldenummer: 01106194.2
(22) Anmeldetag: 14.03.2001
(51) Int. Cl.: B66D 1/39, B66D 1/22, B64D 3/02

(54) **Schleppkabelwinde**
Winch for towing cable
Treuil pour câble de remorquage

(30) Priorität: 08.04.2000 DE 10017599
(43) Veröffentlichungstag der Anmeldung: 06.03.2002
(73) Patentinhaber: DORNIER GmbH, 88039 Friedrichshafen (DE)
(72) Erfinder: Weimer, Peter, 88677 Markdorf (DE); Thümer, Ulf, 09661 Hainichen (DE)
(74) Vertreter: Meel, Thomas

(56) Entgegenhaltungen:
- DE-C- 19 812 335
- US-A- 2 919 869
- US-A- 5 257 746

## Beschreibung

Die Erfindung betrifft eine Schleppkabelwinde mit einem in einem Tragrohr gelagerten axial ortsfesten, rotierenden Wickelarm, der von einem im Tragrohr angeordneten Motor angetrieben wird und das Kabel auf einer axial reversierbar beweglichen Kabeltrommel ablegt, die auf dem Tragrohr gelagert ist, wobei die Umdrehung des Wickelarms mit dem Vorschub der Kabeltrommel synchronisiert ist, dass bei Linearbewegung der Kabeltrommel ihr jeweiliger Vorschub pro Umdrehung des Wickelarms exakt dem Durchmesser des Schleppkabels entspricht und in der Endlage der Kabeltrommel jeweils exakt zwei Kabellagen übereinander abgelegt werden.

Eine Schleppkabelwinde dieser Art ist aus DE 198 12 335 C1 bekannt, welche dem Oberbegriff des unabhängigen Anspruch 1 entspricht.

Aus US 2,919,869 ist eine Schleppkabelwinde mit Planetenradgetriebe bekannt. Das Planetenradgetriebe treibt eine auf einem rotierbaren Rahmen axial verschiebbar angeordnete Kabeltrommel an. Außerdem treibt das Planetenradgetriebe eine koaxial zum rotierbaren Rahmen angeordnete Welle an, wobei diese Welle eine endlose helikal ausgeführte Nut aufweist. In dieser Nut wird ein Mitnehmer geführt, der mit der Kabeltrommel verbunden ist und so ein Verschieben der Kabeltrommel ermöglicht.

Aufgabe der Erfindung ist es, eine aktive Schleppkabelwinde für geschleppte Täuschkörper an Kampfflugzeugen mit den nachfolgend aufgelisteten Eigenschaften zu schaffen:
a) kleinstmögliche Baugröße, bei maximalem Wickelvolumen und geringster Masse
b) aus Forderung a) abgeleitet, eine möglichst integrierte Antriebs/Getriebeeinheit
c) ein möglichst exaktes Ablegen der Kabelwindungen beim Aufspulen (exakt reproduzierbar)
d) Langsamlauf bei hohem Drehmoment sowie höchste Ab- und Aufspulgeschwindigkeiten
e) Minimierung der Reibungsverluste
f) für Hochspannungs- und Lichtwellenleiter einen Aufbau ohne Drehkupplungen (erfordert stehende Kabeltrommel mit umlaufendem Wickelarm)
g) keine Biegeradien kleiner 6 mm zulässig (führt zum Bruch des Lichtwellenleiters).

Diese Aufgabe wird erfindungsgemäß durch die Lehre des Patentanspruchs 1 gelöst. Die Unteransprüche betreffen vorteilhafte Ausgestaltungen der Erfindung. Der Erfindungsgegenstand wird der Forderung gerecht, dass je Wickelarmumdrehung ein exakter Trommelvorschub einer Schleppkabelstärke bis zum Trommelende erfolgt, dann für eine Umdrehung nahezu kein Vorschub erfolgt, so dass die erste Wicklung in der nächst höheren Lage der Trommel möglichst direkt an die Trommelflanke zu liegen kommt. Anschließend soll der Spulvorgang bei konstantem Vorschub in Umkehrrichtung fortgesetzt werden. Hierdurch wird die oft zu beobachtende Anhäufung der Kabelwicklungen im Mittenbereich einer Trommel vermieden und dadurch die Baugröße bei optimaler Betriebssicherheit minimiert.

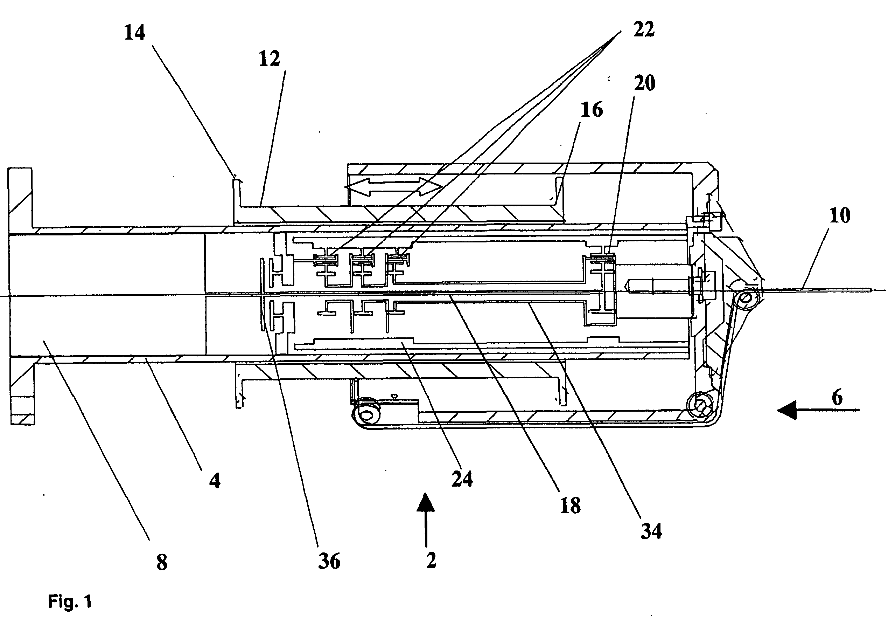

Der Gegenstand der Erfindung hat folgende Vorteile:
- Optimierung der Schleppkabelwinde hinsichtlich Platzbedarf, Einhaltung von Bauraumgrenzen
- Flexibilität des Antriebes bezüglich seiner Fähigkeit, ein Abtriebsmoment durch leicht austauschbare Untersetzungsstufen anzupassen
- Optimierung der Wickelungsgestaltung an den Umlenkpunkten (Seitenscheiben der Kabeltrommel)
- Rotordrehzahl 1000 min⁻¹ bis 2000 min⁻¹
- Vermeidung einer Rückstellung des Antriebes, die durch die Last am Schleppkabel hervorgerufen wird. Dazu wird bei nicht aktiviertem Antriebsmotor die Schleppkabelwinde 2 automatisch mittels einer Festhaltebremse 36 (Fig. 1), die die Rückdrehsicherung (Noback) bewirkt, festgesetzt.
- Abstützung und Übertragung eines durch die Schlepplast verursachten Drehmoments.

Die Erfindung wird nachfolgend anhand von Figuren beschrieben.

Es zeigen:
- Fig. 1: eine Schnittansicht einer erfindungsgemäßen Schleppkabelwinde
- Fig. 2: eine axonometrische Darstellung der Kabeltrommel und der getriebetechnischen Gestaltung für ihre reversierende Bewegung.
- Fig. 3: eine axonometrische Darstellung eines Hohlzylinders mit Nutkurve und
- Fig. 4: die Abwicklung des Hohlzylinders von Fig. 3.

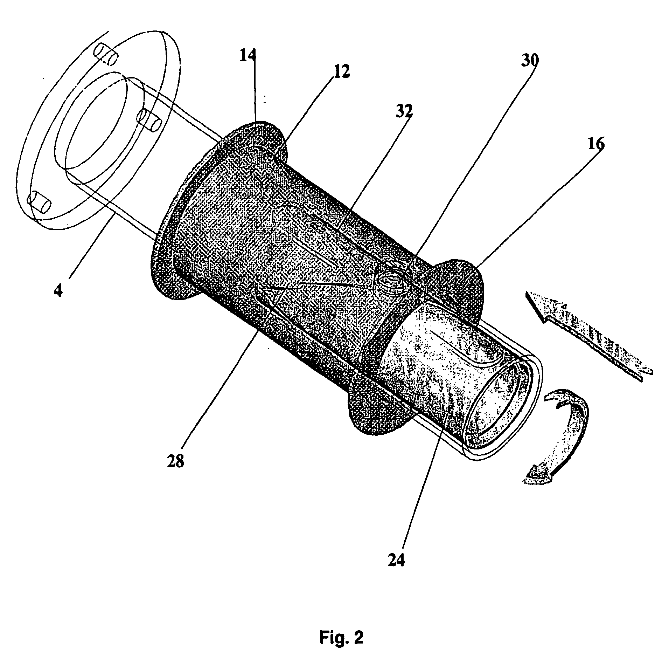

Fig. 1 zeigt eine Schleppkabelwinde 2 mit einem in einem Tragrohr 4 gelagerten axial ortsfesten, rotierenden Wickelarm 6, der von einem im Tragrohr 4 angeordneten Motor 8 mittels Motorwelle 18 angetrieben wird und das Kabel 10 auf einer axial reversierbar beweglichen Kabeltrommel 12 ablegt, die auf dem Tragrohr 4 gelagert ist, wobei die Umdrehung des Wickelarms 6 mit dem Vorschub der Kabeltrommel 12 synchronisiert ist, dass bei Linearbewegung der Kabeltrommel 12 ihr jeweiliger Vorschub pro Umdrehung des Wickelarms 6 exakt dem Durchmesser des Schleppkabels 10 entspricht und in der Endlage der Kabeltrommel 12 an ihren Seitenscheiben 14, 16 jeweils exakt zwei Kabellagen übereinander abgelegt werden. Im Tragrohr 4 ist ein mehrstufiges von der Motorwelle 18 angetriebenes Planetenradgetriebe 20, 22, dessen Sekundärstufe 22 einen im Tragrohr 4 befindlichen Hohlzylinder 24 antreibt, dessen Mantel 26 eine in sich geschlossene Nutkurve 28 (Fig. 2, 3, 4) aufweist. Ein Mitnahmestift 30, der mit der Kabeltrommel 12 verbunden ist, greift in die Nutkurve 28 ein und bewirkt bei Rotation des Hohlzylinders 24 den Vorschub der Kabeltrommel 12, wobei der Mitnahmestift 30 in einem axialen Langloch 32 im Tragrohr 4 geführt wird.

Weiter ist in Figur 1 zu erkennen, dass die Primärstufe 20 des mehrstufigen Planetenradgetriebes die Untersetzung des rotierenden Wickelarms 6 bewirkt und die Sekundärstufe 22 des Planetenradgetriebes die Untersetzung des Hohlzylinders 24 mit Nutkurve 28 bewirkt. Die Primärstufe 20 ist mit der Sekundärstufe 22 mittels einer Hohlwelle 34 verbunden.

Die Primärstufe 20 des mehrstufigen Planetenradgetriebes kann gegen eine Primärstufe mit anderer Untersetzung austauschbar sein. Dies ist in den Fig. nicht gezeigt.

Die in Fig. 1 dargestellte Lösung beruht auf dem bekannten Prinzip eines axial feststehenden, umlaufenden Wickelarmes (Rotor) 6 und einer rein axialbeweglichen Spule oder Kabeltrommel 12. Die erfindungsgemäße Lösung ermöglicht ein sauberes Aneinanderlegen der einzelnen Kabelwicklungen mit definiertem und rotordrehzahlabhängigem Trommelvorschub sowie freier Gestaltungsmöglichkeit der Kabelführung an den Umkehrpunkten (Seitenscheiben 14, 16) der Trommel 12 zum optimalen Lagenwechsel durch Zwangsführung der Kabeltrommel 12 über einen Mitnahmestift 30 in einer Führungsnut 28 (Kurve, Spline) und einer systematischen Aneinanderschaltung von Planetengetrieben 20, 22 im Inneren des Hohlzylinders 24. Bei dieser Getriebelösung ist es möglich, die Primärstufe 20 (zur Rotoruntersetzung) mit geringem Aufwand gegen eine Stufe mit anderer Untersetzung auszutauschen, wobei die Übersetzungsverknüpfung von Rotor 6 zu Kabeltrommel 12 nicht beeinflusst wird.

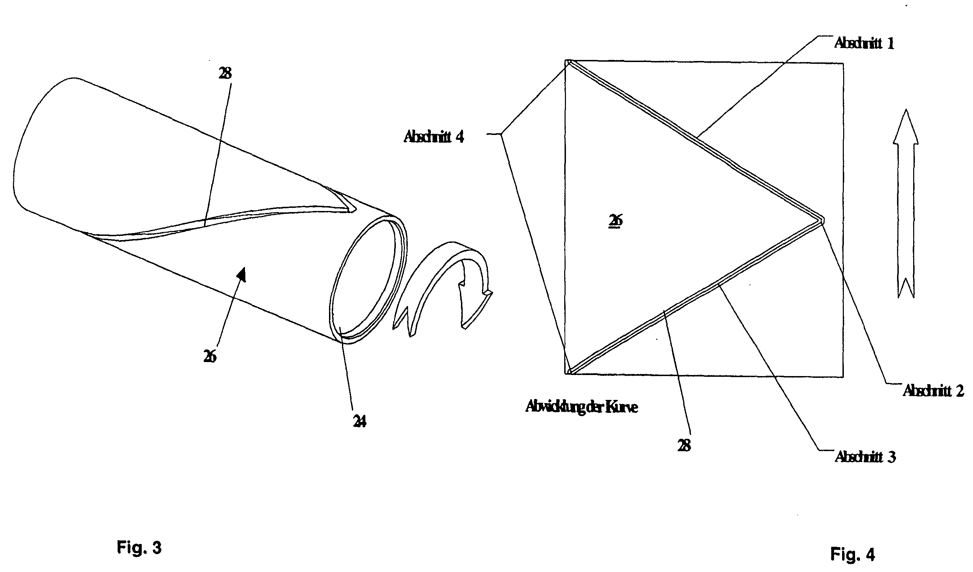

Die Kinematik der Kabeltrommel 12 wird anhand von Fig. 3 und 4 mittels vier annähernd linearer Kurvenabschnitte beschrieben, mit denen eine vollständige Trommelbewegung realisiert wird. Unter einer vollständigen Trommelbewegung wird der Gang der Trommel von einer Kabelanlage ihrer Seitenscheibe 14 zur anderen Seitenscheibe 16 und wieder zurück verstanden. Dabei wird das Kabel 10 in zwei Lagen übereinander gelegt. Fig. 3 zeigt den Hohlzylinder 24 mit Nutkurve 28 und Fig. 4 die auf die Ebene abgewickelte Nutkurve 28.

Die Steigung der Nut 28 in Abschnitt 1 bewirkt eine kontinuierliche axiale Bewegung der Kabeltrommel 12 durch Drehung des Hohlzylinders 24 und mittels des in der Nutkurve 28 geführten Mitnahmestifts 30 bis zu Abschnitt 2. Dort wird durch Übereinstimmung von Kurvenrichtung und Zylinderdrehrichtung eine kurze Rast erzeugt, mit der ein Übereinanderlegen der Kabelwicklung (Beginn der 2. Lage) erreicht wird. Abschnitt 3 führt zur Rückführung der Kabeltrommel 12 und Abschnitt 4 zum Aufsteigen des Kabels in die 3. Lage. Die Trommel 12 befindet sich nun wieder an ihrem Ausgangspunkt.

Des weiteren erfährt die Kabeltrommel 12 in einem Langloch 32 (Fig. 2), die sich im Gehäuse des Tragrohrs 4 befindet, eine Momentenabstützung und damit ihre axiale Führung. Außerdem dient dieses Langloch der Führung des Mitnahmestifts 30.

### Bezugszeichenliste

- 2: Schleppkabelwinde
- 4: Tragrohr
- 6: Wickelarm
- 8: Motor
- 10: Kabel
- 12: Kabeltrommel
- 14, 16: Seitenscheiben
- 18: Motorwelle
- 20: Primärstufe Planetenradgetriebe
- 22: Sekundärstufe Planetenradgetriebe
- 24: Hohlzylinder
- 26: Mantel des Hohlzylinder
- 28: Nutkurve
- 30: Mitnahmestift
- 32: Langloch
- 34: Hohlwelle
- 36: Festhaltebremse

## Patentansprüche

1. Schleppkabelwinde (2) mit einem in einem Tragrohr (4) gelagerten axial ortsfesten, rotierenden Wickelarm (6), der von einem im Tragrohr angeordneten Motor (8) angetrieben wird und das Kabel (10) auf einer axial reversierbar beweglichen Kabeltrommel (12) ablegt, die auf dem Tragrohr (4) gelagert ist, wobei die Umdrehung des Wickelarms (6) mit dem Vorschub der Kabeltrommel (12) synchronisiert ist, dass bei Linearbewegung der Kabeltrommel (12) ihr jeweiliger Vorschub pro Umdrehung des Wickelarms (6) exakt dem Durchmesser des Schleppkabels (10) entspricht und in der Endlage der Kabeltrommel (12) jeweils exakt zwei Kabellagen übereinander abgelegt werden, **dadurch gekennzeichnet, dass** im Tragrohr (4) ein mehrstufiges von der Motorwelle (18) angetriebenes Planetenradgetriebe (20, 22) vorhanden ist, dessen Sekundärstufe (22) einen im Tragrohr (4) befindlichen Hohlzylinder (24) antreibt, dessen Mantel (26) eine in sich geschlossene Nutkurve (28) aufweist und dass ein Mitnahmestift (30), der mit der Kabeltrommel (12) verbunden ist, in die Nutkurve (28) eingreift und bei Rotation des Hohlzylinders (24) den Vorschub der Kabeltrommel (12) bewirkt, wobei der Mitnahmestift (30) in einem axialen Langloch (32) im Tragrohr (4) geführt wird.

2. Schleppkabelwinde nach Anspruch 1, **dadurch gekennzeichnet, dass** die Primärstufe (20) des mehrstufigen Planetenradgetriebes die Untersetzung des rotierenden Wickelarms (6) bewirkt und die Sekundärstufe (22) des Planetenradgetriebes die Untersetzung des Hohlzylinders (24) mit Nutkurve (28) bewirkt.

3. Schleppkabelwinde nach Anspruch 2, **dadurch gekennzeichnet, dass** die Primärstufe (20) des mehrstufigen Planetenradgetriebes gegen eine Primärstufe mit anderer Untersetzung austauschbar ist.

4. Schleppkabelwinde nach Anspruch 1, **dadurch gekennzeichnet, dass** die im Hohlzylinder (24) befindliche geschlossene Nutkurve (28) in der Abwicklung des Hohlzylinders die Schenkel eines gleichschenkligen Dreiecks bildet.

5. Schleppkabelwinde nach einem der Ansprüche 1 bis 4, **dadurch gekennzeichnet, dass** bei nicht aktiviertem Antriebsmotor (8) die Schleppkabelwinde (2) automatisch mittels einer Festhaltebremse (36) als Rückdrehsicherung festgesetzt wird.

## Claims

1. Towing cable winch (2) having a rotating winding arm (6) which is mounted in a supporting tube (4), is fixed in position axially and is driven by a motor (8) that is arranged in the supporting tube, and stores the cable (10) on an axially reversibly moving cable drum (12) which is mounted on the supporting tube (4), with the rotation of the winding arm (6) being synchronized to the feed of the cable drum (12), in that, during the linear movement of the cable drum (12), its respective feed per revolution of the winding arm (6) corresponds exactly to the diameter of the towing cable (10), and exactly two cable layers are stored one above the other in each case in the final position of the cable drum (12), **characterized in that** a multistage epicyclic gear system (20, 22), which is driven by the motor shaft (18), is provided, whose secondary stage (22) drives a hollow cylinder (24) which is located in the supporting tube (4), whose casing (26) has an intrinsically closed groove curve (28), and **in that** a driver pin (30) which is connected to the cable drum (12) engages in the groove curve (28) and, during the rotation of the hollow cylinder (24), results in the feeding of the cable drum (12) with the driver pin (30) being guided in an axial elongate hole (32) in the supporting tube (4).

2. Towing cable winch according to Claim 1, **characterized in that** the primary stage (20) of the multistage epicyclic gear system provides a step-down ratio for the rotating winding arm (6), and the secondary stage (22) of the epicyclic gear system provides a step-down ratio for the hollow cylinder (24) with the groove curve (28).

3. Towing cable winch according to Claim 2, **characterized in that** the primary stage (20) of the multistage epicyclic gear system can be replaced by a primary stage with a different step-down ratio.

4. Towing cable winch according to Claim 1, **characterized in that** the closed groove curve (28) which is located in the hollow cylinder (24) forms the limb of an equilateral triangle in the development of the hollow cylinder.

5. Towing cable winch according to one of Claims 1 to 4, **characterized in that**, when the drive motor (8) is not activated, the towing cable winch (2) is automatically fixed by means of a parking brake (36) as protection against it rotating backwards.

## Revendications

1. Treuil pour câble de remorquage (2) comprenant un bras d'enroulement (6) rotatif logé de manière fixe axialement dans un tube support (4), lequel est entraîné par un moteur (8) disposé dans le tube support et dépose le câble (10) sur un enrouleur de câble (12) mobile réversible dans le sens axial qui est logé sur le tube support (4), la rotation du bras d'enroulement (6) étant synchronisée avec l'avance de l'enrouleur de câble (12) de telle manière que lors d'un mouvement linéaire de l'enrouleur de câble (12), son avance par tour du bras d'enroulement (6) corresponde exactement au diamètre du câble de remorquage (10) et qu'exactement deux couches de câble soient déposées l'une au-dessus de l'autre aux positions extrêmes respectives de l'enrouleur de câble (12), **caractérisé en ce que** le tube support (4) comprend un engrenage planétaire (20, 22) à étages multiples entraîné par l'arbre du moteur (18) et dont l'étage secondaire (22) entraîne un cylindre creux (24) qui se trouve dans le bras support (4) et dont la chemise (26) présente une came à rainure (28) fermée en elle-même et qu'une goupille d'entraînement (30) qui est fixée à l'enrouleur de câble (12) pénètre dans la came à rainure (28) et provoque l'avance de l'enrouleur de câble (12) lors de la rotation du cylindre creux (24), la goupille d'entraînement (30) étant guidée dans un trou oblong axial (32) dans le tube support (4).

2. Treuil pour câble de remorquage selon la revendication 1, **caractérisé en ce que** l'étage primaire (20) de l'engrenage planétaire à plusieurs étages produit la démultiplication du bras d'enroulement rotatif (6) et l'étage secondaire (22) de l'engrenage planétaire produit la démultiplication du cylindre creux (24) pourvu de la came à rainure (28).

3. Treuil pour câble de remorquage selon la revendication 2, **caractérisé en ce que** l'étage primaire (20) de l'engrenage planétaire à plusieurs étages peut être remplacé par un étage primaire ayant un rapport de démultiplication différent.

4. Treuil pour câble de remorquage selon la revendication 1, **caractérisé en ce que** la came à rainure (28) fermée qui se trouve dans le cylindre creux (24) forme, dans le développement du cylindre creux, la branche d'un triangle équilatéral.

5. Treuil pour câble de remorquage selon l'une des revendications 1 à 4, **caractérisé en ce que** lorsque le moteur d'entraînement (8) n'est pas activé, le treuil pour câble de remorquage (2) est immobilisé automatiquement à l'aide d'un frein de blocage (36) qui fait office de sécurité anti-contra rotation.
